# EUROPEAN PATENT APPLICATION

(11) **EP 4 529 259 A1**
(43) Date of publication of application: **26.03.2025**
(21) Application number: 23822970.2
(22) Date of filing: 06.06.2023
(51) Int. Cl.: H04W 24/08

(54) **COMMUNICATION METHOD AND APPARATUS**

(30) Priority: 13.06.2022 CN 202210678317
(71) Applicant: Huawei Technologies Co., Ltd., Shenzhen, Guangdong 518129 (CN)
(72) Inventor: YOU, Chunhua, Shenzhen, Guangdong 518129 (CN); WANG, Jue, Shenzhen, Guangdong 518129 (CN); FAN, Qiang, Shenzhen, Guangdong 518129 (CN); LOU, Chong, Shenzhen, Guangdong 518129 (CN)
(74) Representative: Isarpatent
(86) International application number: PCT/CN2023/098520
(87) International publication number: WO 2023/241401

(57) **Abstract**

This application relates to the field of communication technologies, and discloses a communication method and apparatus. The method includes: A network device determines energy saving information of a first cell, where the energy saving information indicates a compensation value corresponding to a first energy saving state, and when the first cell is in the first energy saving state, the compensation value is used to compensate a measurement value of an SSB associated with the compensation value, and sends the energy saving information to a terminal device. According to the method, the network device may perform an energy saving operation on the SSB (for example, reducing a transmit power of the SSB), and send the energy saving information of the first cell to the terminal device. Therefore, when the first cell is in the first energy saving state, the terminal device may compensate, based on the compensation value, the measurement value of the SSB associated with the compensation value, and a compensated measurement value of the SSB is used to determine cell quality. In this way, accuracy of the cell quality determined by the terminal device can be improved while power consumption of the network device is reduced.

## Description

### CROSS-REFERENCE TO RELATED APPLICATIONS

This application claims priority to Chinese Patent Application No. 202210678317.5, filed with the China National Intellectual Property Administration on June 13, 2022 and entitled "COMMUNICATION METHOD AND APPARATUS", which is incorporated herein by reference in its entirety.

### TECHNICAL FIELD

This application relates to the field of communication technologies, and in particular, to a communication method and apparatus.

### BACKGROUND

As a network scale increases, power consumption of a device keeps increasing. High power consumption of a network device gradually becomes one of main causes for high operation costs of operators. How to reduce the power consumption of the network device still needs further research.

### SUMMARY

This application provides a communication method and apparatus, to reduce power consumption of a network device by performing an energy saving operation on an SSB.

According to a first aspect, an embodiment of this application provides a communication method. The method may be applied to a network device or a module (such as a chip) in a network device. For example, the method is applied to the network device. In the method, the network device determines energy saving information of a first cell, where the energy saving information indicates a compensation value corresponding to a first energy saving state, and when the first cell is in the first energy saving state, the compensation value is used to compensate a measurement value of a synchronization signal and physical broadcast channel block SSB associated with the compensation value, and sends the energy saving information to a terminal device.

According to the foregoing method, the network device may perform an energy saving operation on the SSB (for example, reducing a transmit power of the SSB), and send the energy saving information of the first cell to the terminal device. Therefore, when the first cell is in the first energy saving state, the terminal device may compensate, based on the compensation value, the measurement value of the SSB associated with the compensation value, and a compensated measurement value of the SSB may be used to determine cell quality. In this way, accuracy of the cell quality determined by the terminal device can be improved while power consumption of the network device is reduced.

In a possible design, the first energy saving state is a light energy saving state or a deep energy saving state.

In a possible design, the method further includes: sending first indication information to the terminal device, where the first indication information indicates that the first cell is in the first energy saving state.

In a possible design, the sending first indication information to the terminal device includes: sending the first indication information to the terminal device after determining that load of the first cell satisfies a preset condition.

In a possible design, the first indication information includes at least one of the following: an identifier of the first energy saving state; start time information of the first energy saving state of the first cell; duration of the first energy saving state of the first cell; end time information of the first energy saving state of the first cell; and frequency range information of the first cell in the first energy saving state.

In a possible design, the first indication information is carried in downlink control information DCI.

In a possible design, the DCI is used to page the terminal device.

In a possible design, the energy saving information is carried in a system message of the first cell.

According to a second aspect, an embodiment of this application provides a communication method. The method may be applied to a terminal device or a module (such as a chip) in a terminal device. For example, the method is applied to the terminal device. In the method, the terminal device receives energy saving information of a first cell from a network device, where the energy saving information indicates a compensation value corresponding to a first energy saving state; and when the first cell is in the first energy saving state, compensates, based on the compensation value, a measurement value of an SSB associated with the compensation value.

In a possible design, the first energy saving state is a light energy saving state or a deep energy saving state.

In a possible design, the method further includes: receiving first indication information from the network device, where the first indication information indicates that the first cell is in the first energy saving state.

In a possible design, the first indication information includes at least one of the following: an identifier of the first energy saving state; start time information of the first energy saving state of the first cell; duration of the first energy saving state of the first cell; end time information of the first energy saving state of the first cell; and frequency range information of the first cell in the first energy saving state.

In a possible design, the first indication information is carried in DCI.

In a possible design, the DCI is used to page the terminal device.

In a possible design, the energy saving information is carried in a system message of the first cell.

According to a third aspect, an embodiment of this application provides a communication method. The method may be applied to a network device or a module (for example, a chip) in a network device. For example, the method is applied to the network device. In the method, the network device determines third indication information, where the third indication information indicates that M SSBs of a first cell are in a shutdown state, and M is a positive integer; and sends the third indication information to a terminal device.

According to the foregoing method, the network device may shut down the M SSBs of the first cell, to reduce power consumption of the network device. In addition, the network device may send the third indication information to the terminal device, where the third indication information indicates that the M SSBs of the first cell are in the shutdown state. Therefore, the terminal device may not measure the M SSBs based on the third indication information when the M SSBs are in the shutdown state, so that power consumption of the terminal device can be effectively reduced, or the measurement result is considered invalid even if the M SSBs are measured, to effectively avoid inaccurate cell quality determined by the terminal device.

In a possible design, the third indication information is sent to the terminal device after it is determined that load of the first cell satisfies a preset condition.

In a possible design, the method further includes: sending fourth indication information to the terminal device, where the fourth indication information indicates N SSBs of the first cell that are allowed to be dynamically shut down, the N SSBs include the M SSBs, and N is a positive integer.

In a possible design, the fourth indication information is carried in a system message of the first cell.

In a possible design, the third indication information includes indexes of the M SSBs; or the third indication information includes at least one of the following: an index of a 1^{st} SSB in the M SSBs, a value of M, and an index of a last SSB in the M SSBs. In this case, the indexes of the M SSBs are consecutive.

In a possible design, the third indication information further indicates a first time period, and the M SSBs are in the shutdown state in the first time period.

In a possible design, the first time period includes at least one of the following: a first synchronization burst set periodicity, where the first synchronization burst set periodicity is a synchronization burst set periodicity in which receiving time of first indication information falls; and K consecutive synchronization burst set periodicities, where a 1^{st} synchronization burst set periodicity in the K synchronization burst set periodicities is a next synchronization burst set periodicity of the first synchronization burst set periodicity, and K is a positive integer.

In a possible design, the third indication information is carried in DCI.

In a possible design, the DCI is used to page the terminal device.

In a possible design, the method further includes: sending a PDSCH to the terminal device on a first time-frequency resource, where the first time-frequency resource includes a time-frequency resource corresponding to at least one of the M SSBs that are shut down.

According to a fourth aspect, an embodiment of this application provides a communication method. The method may be applied to a terminal device or a module (for example, a chip) in a terminal device. For example, the method is applied to the terminal device. In the method, the terminal device receives third indication information from a network device, where the third indication information indicates that M SSBs of a first cell are in a shutdown state, and M is a positive integer; and determines, based on the third indication information, that the M SSBs are in the shutdown state.

In a possible design, the method further includes: receiving fourth indication information from the network device, where the fourth indication information indicates N SSBs of the first cell that are allowed to be dynamically shut down, the N SSBs include the M SSBs, and N is a positive integer.

In a possible design, the fourth indication information is carried in a system message of the first cell.

In a possible design, the third indication information includes indexes of the M SSBs; or the third indication information includes at least one of the following: an index of a 1^{st} SSB in the M SSBs, a value of M, and an index of a last SSB in the M SSBs. In this case, the indexes of the M SSBs are consecutive.

In a possible design, the third indication information further indicates a first time period, and the M SSBs are in the shutdown state in the first time period.

In a possible design, the first time period includes at least one of the following: a first synchronization burst set periodicity, where the first synchronization burst set periodicity is a synchronization burst set periodicity in which receiving time of first indication information falls; and K consecutive synchronization burst set periodicities, where a 1^{st} synchronization burst set periodicity in the K synchronization burst set periodicities is a next synchronization burst set periodicity of the first synchronization burst set periodicity, and K is a positive integer.

In a possible design, the third indication information is carried in DCI.

In a possible design, the DCI is used to page the terminal device.

In a possible design, the method further includes: receiving a PDSCH from the network device on a first time-frequency resource, where the first time-frequency resource includes a time-frequency resource corresponding to at least one of the M SSBs that are shut down.

According to a fifth aspect, an embodiment of this application provides a communication method. The method may be applied to a network device or a module (for example, a chip) in a network device. For example, the method is applied to the network device. In the method, the network device sends configuration information of a plurality of SSB transmission modes to a terminal device, where the plurality of SSB transmission modes include a first SSB transmission mode, and configuration information of the first SSB transmission mode is used to configure the first SSB transmission mode; sends fifth indication information to the terminal device, where the fifth indication information indicates that the first SSB transmission mode is used in a first cell; and sends, in the first cell, an SSB based on the first SSB transmission mode.

According to the foregoing method, the network device may configure the plurality of SSB transmission modes, and dynamically switch between the plurality of SSB transmission modes, to reduce power consumption of the network device. In addition, the network device may indicate, to the terminal device, an SSB transmission mode used in the first cell, so that the terminal device receives an SSB based on the corresponding SSB transmission mode.

In a possible design, the configuration information of the first SSB transmission mode includes at least one of the following: an index of an SSB corresponding to the first SSB transmission mode; and a synchronization burst set periodicity corresponding to the first SSB transmission mode.

According to a sixth aspect, an embodiment of this application provides a communication method. The method may be applied to a terminal device or a module (for example, a chip) in a terminal device. For example, the method is applied to the terminal device. In the method, the terminal device receives configuration information of a plurality of SSB transmission modes from a network device, where the plurality of SSB transmission modes include a first SSB transmission mode, and configuration information of the first SSB transmission mode is used to configure the first SSB transmission mode; receives fifth indication information from the network device, where the fifth indication information indicates that the first SSB transmission mode is used in a first cell; and receives an SSB from the network device based on the first SSB transmission mode.

In a possible design, the configuration information of the first SSB transmission mode includes at least one of the following: an index of an SSB corresponding to the first SSB transmission mode; and a synchronization burst set periodicity corresponding to the first SSB transmission mode.

According to a seventh aspect, this application provides a communication apparatus. The communication apparatus has a function for implementing the first aspect, the third aspect, or the fifth aspect. For example, the communication apparatus includes a module, a unit, or a means (means) corresponding to an operation in the first aspect, the third aspect, or the fifth aspect. The module, the unit, or the means may be implemented by software, or may be implemented by hardware, or may be implemented by hardware executing corresponding software.

In a possible design, the communication apparatus includes a processing unit and a communication unit. The communication unit may be configured to receive and send a signal, to implement communication between the communication apparatus and another apparatus. The processing unit may be configured to perform some internal operations of the communication apparatus. Functions performed by the processing unit and the communication unit may correspond to operations in the first aspect, the third aspect, or the fifth aspect.

In a possible design, the communication apparatus includes a processor. The processor may be configured to be coupled to a memory. The memory may store a necessary computer program or instructions for implementing a function in the first aspect, the third aspect, or the fifth aspect. The processor may execute the computer program or the instructions stored in the memory, and when the computer program or the instructions are executed, the communication apparatus is enabled to implement the method according to any possible design or implementation of the first aspect, the third aspect, or the fifth aspect.

In a possible design, the communication apparatus includes a processor and a memory. The memory may store a necessary computer program or instructions for implementing a function in the first aspect, the third aspect, or the fifth aspect. The processor may execute the computer program or the instructions stored in the memory, and when the computer program or the instructions are executed, the communication apparatus is enabled to implement the method according to any possible design or implementation of the first aspect, the third aspect, or the fifth aspect.

In a possible design, the communication apparatus includes a processor and an interface circuit. The processor is configured to communicate with another apparatus by using the interface circuit, and perform the method according to any possible design or implementation of the first aspect, the third aspect, or the fifth aspect.

According to an eighth aspect, this application provides a communication apparatus. The communication apparatus has a function for implementing the second aspect, the fourth aspect, or the sixth aspect. For example, the communication apparatus includes a module, a unit, or a means corresponding to an operation in the second aspect, the fourth aspect, or the sixth aspect. The function, the unit, or the means may be implemented by software, or may be implemented by hardware, or may be implemented by hardware executing corresponding software.

In a possible design, the communication apparatus includes a processing unit and a communication unit. The communication unit may be configured to receive and send a signal, to implement communication between the communication apparatus and another apparatus. For example, the communication unit is configured to send system information to a terminal device. The processing unit may be configured to perform some internal operations of the communication apparatus. Functions performed by the processing unit and the communication unit may correspond to operations in the second aspect, the fourth aspect, or the sixth aspect.

In a possible design, the communication apparatus includes a processor. The processor may be configured to be coupled to a memory. The memory may store a necessary computer program or instructions for implementing a function in the second aspect, the fourth aspect, or the sixth aspect. The processor may execute the computer program or the instructions stored in the memory, and when the computer program or the instructions are executed, the communication apparatus is enabled to implement the method according to any possible design or implementation of the second aspect, the fourth aspect, or the sixth aspect.

In a possible design, the communication apparatus includes a processor and a memory. The memory may store a necessary computer program or instructions for implementing a function in the second aspect, the fourth aspect, or the sixth aspect. The processor may execute the computer program or the instructions stored in the memory, and when the computer program or the instructions are executed, the communication apparatus is enabled to implement the method according to any possible design or implementation of the second aspect, the fourth aspect, or the sixth aspect.

In a possible design, the communication apparatus includes a processor and an interface circuit. The processor is configured to communicate with another apparatus by using the interface circuit, and perform the method according to any possible design or implementation of the second aspect, the fourth aspect, or the sixth aspect.

It may be understood that in the seventh aspect or the eighth aspect, the processor may be implemented by hardware or implemented by software. When the processor is implemented by the hardware, the processor may be a logic circuit, an integrated circuit, or the like. When the processor is implemented by the software, the processor may be a general-purpose processor, and is implemented by reading software code stored in the memory. In addition, there may be one or more processors, and one or more memories. The memory may be integrated with the processor, or the memory and the processor are disposed separately. In a specific implementation process, the memory and the processor may be integrated into one chip, or may be disposed on different chips. A type of the memory and a manner in which the memory and the processor are disposed are not limited in this embodiment of this application.

According to a ninth aspect, this application provides a communication system. The communication system may include the communication apparatus provided in the seventh aspect and the communication apparatus provided in the eighth aspect.

According to a tenth aspect, this application provides a computer-readable storage medium. The computer storage medium stores computer-readable instructions; and when a computer reads and executes the computer-readable instructions, the computer is enabled to perform the method according to any one of the possible designs of the first aspect to the sixth aspect.

According to an eleventh aspect, this application provides a computer program product; and when a computer reads and executes the computer program product, the computer is enabled to perform the method according to any one of the possible designs of the first aspect to the sixth aspect.

According to a twelfth aspect, this application provides a chip. The chip includes a processor, and the processor is coupled to a memory, and is configured to read and execute a software program stored in the memory, to implement the method according to any one of the possible designs of the first aspect to the sixth aspect.

### BRIEF DESCRIPTION OF DRAWINGS

FIG. 1 is a diagram of a network architecture to which an embodiment of this application is applicable;
FIG. 2a is a diagram of an SSB according to an embodiment of this application;
FIG. 2b is a diagram of a synchronization burst set according to an embodiment of this application;
FIG. 2c and FIG. 2d each are a diagram of a time domain pattern of an SSB according to an embodiment of this application;
FIG. 3 is a diagram of a coverage area of an SSB according to an embodiment of this application;
FIG. 4 is a schematic flowchart corresponding to a communication method according to an embodiment of this application;
FIG. 5 is a schematic flowchart corresponding to a communication method according to an embodiment of this application;
FIG. 6 is a diagram of sending a PDSCH by using a resource of an SSB that is shut down according to an embodiment of this application;
FIG. 7 is a schematic flowchart corresponding to a communication method according to an embodiment of this application;
FIG. 8 is a block diagram of a possible example of an apparatus according to an embodiment of this application;
FIG. 9 is a diagram of a structure of a terminal device according to an embodiment of this application; and
FIG. 10 is a diagram of a structure of a network device according to an embodiment of this application.

### DESCRIPTION OF EMBODIMENTS

The following describes the technical solutions in embodiments of this application with reference to the accompanying drawings in embodiments of this application.

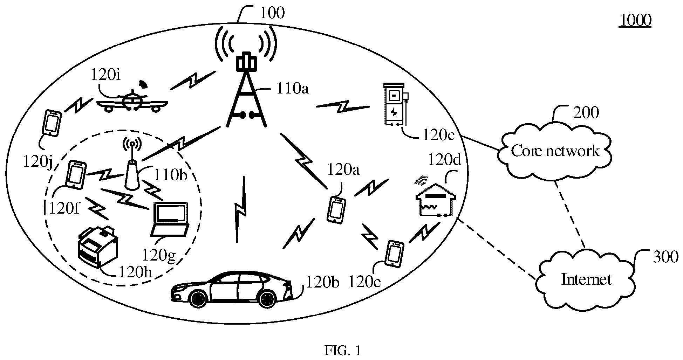

FIG. 1 is a diagram of an architecture of a communication system to which an embodiment of this application is applied. As shown in FIG. 1, the communication system 1000 includes a radio access network 100 and a core network 200. Optionally, the communication system 1000 may further include an internet 300. The radio access network 100 may include at least one network device, for example, 110a and 110b in FIG. 1, and may further include at least one terminal device, for example, 120a to 120j in FIG. 1. 110a is a base station, 110b is a micro base station, 120a, 120e, 120f, and 120j are mobile phones, 120b is a vehicle, 120c is a fuel dispenser, 120d is a home access node (home access point, HAP) deployed indoors or outdoors, 120g is a notebook computer, 120h is a printer, and 120i is an uncrewed aerial vehicle.

In FIG. 1, the terminal device may be connected to the network device, and the network device may be connected to a core network device in the core network. The core network device and the network device may be different physical devices independent of each other; functions of the core network device and logical functions of the network device may be integrated into a same physical device; or some functions of the core network device and some functions of the network device may be integrated into one physical device. Connection between terminal devices and connection between network devices may be performed in a wired or wireless manner. FIG. 1 is merely a diagram. The communication system may further include another device, for example, a wireless relay device and a wireless backhaul device, which are not drawn in FIG. 1.

The following describes the network device and the terminal device.

### (1) Network device

The network device includes a radio access network device (which may also be referred to as an access network device). The network device may be a base station, an evolved base station (evolved NodeB, eNodeB), a transmission reception point (transmission reception point, TRP), a next generation base station (next generation NodeB, gNB) in a 5th generation (5th generation, 5G) mobile communication system, a base station in a 6th generation (6th generation, 6G) mobile communication system, a base station in a future mobile communication system, an access node in a wireless fidelity (wireless fidelity, Wi-Fi) system, or the like; or may be a module or unit that completes some functions of a base station, for example, may be a central unit (central unit, CU), or may be a distributed unit (distributed unit, DU). The network device may be a macro base station (for example, 110a in FIG. 1), may be a micro base station or an indoor base station (for example, 110b in FIG. 1), or may be a relay node, a donor node, or the like. A specific technology and a specific device form that are used by the network device are not limited in embodiments of this application.

In embodiments of this application, an apparatus configured to implement a function of the network device may be a network device, or may be an apparatus that can support the network device in implementing the function, for example, a chip system. The apparatus may be installed in the network device. The chip system may include a chip, or may include a chip and another discrete device. In the technical solutions provided in embodiments of this application, an example in which the apparatus configured to implement the function of the network device is the network device is used to describe the technical solutions provided in embodiments of this application.

### (2) Terminal device

The terminal device may also be referred to as a terminal, user equipment (user equipment, UE), a mobile station, a mobile terminal, or the like. The terminal device may be widely used in various scenarios, for example, a device-to-device (device-to-device, D2D) scenario, a vehicle to everything (vehicle to everything, V2X) communication scenario, a machine-type communication (machine-type communication, MTC) scenario, an internet of things (internet of things, IOT) scenario, a virtual reality scenario, an augmented reality scenario, an industrial control scenario, a self-driving scenario, a telemedicine scenario, a smart grid scenario, a smart furniture scenario, a smart office scenario, a smart wearable scenario, a smart transportation scenario, and a smart city scenario. The terminal device may be a mobile phone, a tablet computer, a computer having a wireless transceiver function, a wearable device, a vehicle, an uncrewed aerial vehicle, a helicopter, an airplane, a ship, a robot, a robot arm, a smart home device, or the like. A specific technology and a specific device form that are used by the terminal device are not limited in embodiments of this application.

In embodiments of this application, an apparatus configured to implement a function of the terminal device may be a terminal device, or may be an apparatus that can support the terminal device in implementing the function, for example, a chip system. The apparatus may be installed in the terminal device. In the technical solutions provided in embodiments of this application, an example in which the apparatus configured to implement the function of the terminal device is the terminal device is used to describe the technical solutions provided in embodiments of this application.

In addition, a same terminal device or network device may provide different functions in different application scenarios. For example, the mobile phones in FIG. 1 include 120a, 120e, 120f, and 120j. The mobile phone 120a may access the base station 110a, connect to the vehicle 120b, directly communicate with the mobile phone 120e, and access the HAP. The mobile phone 120e may access the HAP and directly communicate with the mobile phone 120a. The mobile phone 120f may access the micro base station 110b, connect to the notebook computer 120g, and connect to the printer 120h. The mobile phone 120j may control the uncrewed aerial vehicle 120i.

Roles of the network device and the terminal device may be relative. For example, the helicopter or the uncrewed aerial vehicle 120i in FIG. 1 may be configured as a mobile base station. For the terminal device 120j that accesses the radio access network 100 through 120i, the terminal device 120i is a base station. However, for the base station 110a, 120i is a terminal device. In other words, 110a communicates with 120i according to a wireless air interface protocol. Certainly, 110a and 120i may alternatively communicate with each other according to an interface protocol between base stations. In this case, for 110a, 120i is also a base station. Therefore, both the radio access network and the terminal device may be collectively referred to as communication apparatuses, 110a and 110b in FIG. 1 may be referred to as communication apparatuses having a base station function, and 120a to 120j in FIG. 1 may be referred to as communication apparatuses having a terminal device function.

The network device and the terminal device may be at fixed locations, or may be movable. The network device and the terminal device may be deployed on land, including an indoor device, an outdoor device, a handheld device, or an in-vehicle device; may be deployed on water; or may be deployed on an airplane, a balloon, and a satellite in the air. An application scenario of the network device and the terminal device is not limited in embodiments of this application.

Communication may be performed between the network device and the terminal device, between the network devices, and between the terminal devices by using a licensed spectrum, or may be performed by using an unlicensed spectrum, or may be performed by using both a licensed spectrum and an unlicensed spectrum. Communication may be performed by using a spectrum below 6 gigahertz (gigahertz, GHz), or may be performed by using a spectrum above 6 GHz, or may be performed by using both a spectrum below 6 GHz and a spectrum above 6 GHz. A spectrum resource for wireless communication is not limited in embodiments of this application.

The communication system shown in FIG. 1 may support various radio access technologies (radio access technologies, RATs). For example, the communication system shown in FIG. 1 may be a 4th generation (4th generation, 4G) communication system (which may also be referred to as a long term evolution (long term evolution, LTE) communication system), a 5G communication system (which may also be referred to as a new radio (new radio, NR) communication system), a 6G communication system, or a future-oriented evolved system. The communication system and a service scenario described in embodiments of this application are intended to describe the technical solutions in embodiments of this application more clearly, but do not constitute a limitation on the technical solutions provided in embodiments of this application. A person of ordinary skill in the art may learn that the technical solutions provided in embodiments of this application are also applicable to a similar technical problem as the communication system evolves and a new service scenario emerges.

The following first describes related technical features in embodiments of this application. It should be noted that these explanations are intended to facilitate understanding of embodiments of this application, but should not be considered as a limitation on the scope of the protection claimed in this application.

### (1) Composition of an SSB

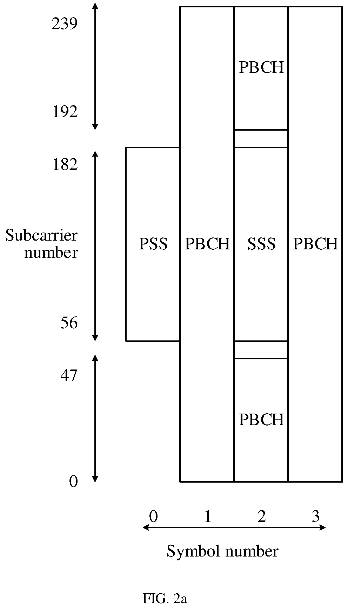

A synchronization signal and physical broadcast channel (physical broadcast channel, PBCH) block (synchronization signal and PBCH block, SSB) may include a primary synchronization signal (primary synchronization signal, PSS), a secondary synchronization signal (secondary synchronization signal, SSS), and a PBCH. As shown in FIG. 2a, in time domain, one SSB occupies four orthogonal frequency division multiplexing (orthogonal frequency division multiplexing, OFDM) symbols (symbols), which are symbols 0 to 3. In frequency domain, one SSB occupies 20 resource blocks (resource blocks, RBs) (where one RB includes 12 subcarriers), that is, 240 subcarriers, and subcarrier numbers are 0 to 239. The PSS is located on 127 subcarriers in a middle of the symbol 0, and the SSS is located on 127 subcarriers in a middle of the symbol 2. To protect the PSS and the SSS, different guard subcarriers are present respectively. The guard subcarriers are not used for carrying a signal. Subcarriers are separately reserved on two sides of the SSS as guard subcarriers. For example, blank areas on the two sides of the SSS in FIG. 2a are guard subcarriers. The PBCH occupies all subcarriers of the symbol 1 and the symbol 3, and occupies a part of remaining subcarriers other than subcarriers occupied by the SSS in all subcarriers of the symbol 2 (namely, subcarriers other than guard subcarriers in remaining subcarriers).

The PSS may be used to transmit a cell identity, and the SSS may be used to transmit a cell group identity. The cell identity and the cell group identity jointly determine a plurality of physical cell identities (physical cell identities, PCIs) in a 5G communication system. Once the terminal device successfully finds the PSS and the SSS, the terminal device knows a physical cell identity of this 5G carrier, and therefore, has a capability of parsing a system message included in the SSB.

The system message in the SSB is carried on the PBCH channel. The information is information necessary for accessing a network by the terminal device, and therefore, may be referred to as a main information block (main information block, MIB). The MIB may include a system frame number, an initial-access subcarrier spacing, and other information.

Because the MIB includes limited information, it is not enough to support the terminal device in accessing a 5G cell. Therefore, the terminal device further needs to obtain some necessary system messages, for example, a system information block (system information block, SIB) 1. The SIB 1 is transmitted on a physical downlink shared channel (physical downlink shared channel, PDSCH) in a periodicity of 160 milliseconds. Because the terminal device has obtained, from the MIB carried on the PBCH, a parameter used to transmit the SIB 1 and a distribution status of control resources for scheduling the SIB 1, the terminal device can receive the SIB 1. In this way, the terminal device can obtain the system message necessary for accessing the 5G cell, and can subsequently access the 5G cell.

### (2) SSB transmission

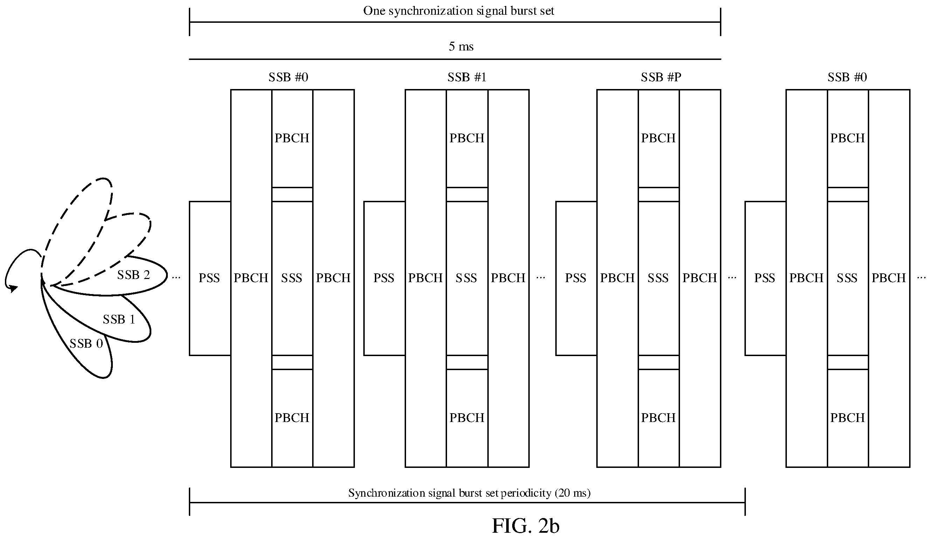

In a 5G communication system, a network device uses more antennas to enhance coverage. However, using more antennas causes the antenna to radiate an excessively narrow beam, and a single narrow beam cannot cover an entire cell. In addition, due to hardware limitations, the network device usually cannot simultaneously send signals by using a plurality of beams to cover the entire cell. Therefore, a beam scanning technology is introduced in the 5G communication system, in other words, the network device may send signals at different moments by using different beams. For example, for one cell, the network device may send SSBs at different moments by using different beams, to complete broadcast beam coverage of the cell, as shown in FIG. 2b.

A set of SSBs sent by the network device in one beam scanning process may be referred to as a synchronization burst set (synchronization signal burst set, SS burst set). An SS burst set periodicity is equivalent to a periodicity of an SSB corresponding to a specific beam, and may be configured as 5 ms (milliseconds), 10 ms, 20 ms, 40 ms, 80 ms, 160 ms, or the like. When performing cell search, a terminal device cannot wait for excessively long time on a specific frequency, and therefore, waits for 20 ms by default. If the terminal device waits for 20 ms on a specific frequency, and does not find an SSB, the terminal device considers that no 5G cell exists on the frequency, and may switch to a next frequency for further attempt.

Currently, a maximum of four, eight, or 64 SSBs are included in one SS burst set periodicity. When a carrier frequency band is less than or equal to 3 GHz, a maximum of four SSBs are present in one SS burst set periodicity. Each SS burst set is always located in a time interval of 5 ms. For a diagram of the SS burst set, refer to FIG. 2b. In FIG. 2b, an example in which an SS burst set periodicity is 20 ms and one SS burst set includes P SSBs is used.

### (3) Time-frequency location of an SSB

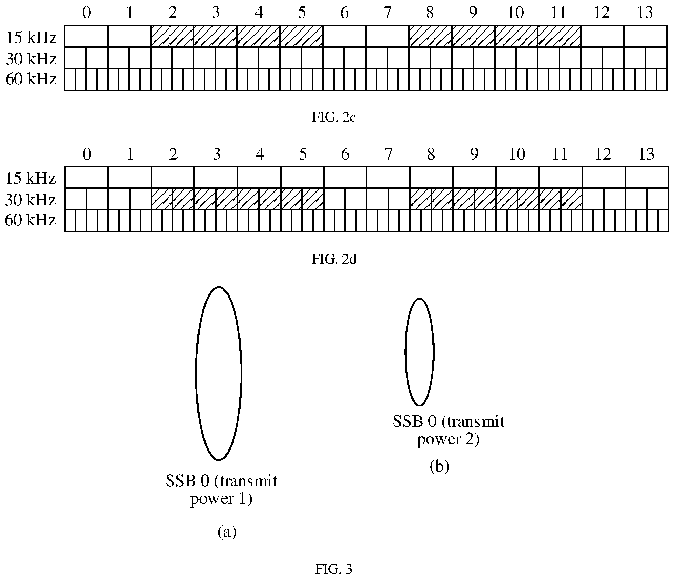

A time domain location of the SSB may be specified in a protocol, and the protocol specifies relationships between different subcarrier spacings (subcarrier spacings, SCSs) and time domain patterns (patterns) of the SSB. Refer to FIG. 2c and FIG. 2d. The two figures respectively show time domain patterns of the SSB.

FIG. 2c shows a time domain pattern of SSBs included in one slot when a subcarrier spacing is 15 kHz. It can be learned that one slot includes two SSBs. In FIG. 2c, boxes marked with slashes represent symbols occupied by the SSBs.

FIG. 2d shows a time domain pattern of SSBs included in one slot when a subcarrier spacing is 30 kHz. It can be learned that one slot includes two SSBs. In FIG. 2d, boxes marked with slashes represent symbols occupied by the SSBs.

In a 4G communication system, an SSB may be located at a center of a carrier. Because a system bandwidth of a 5G communication system is large, for example, a high frequency can reach 400 MHz, which is far greater than that of a 4G system bandwidth (with a maximum of 20 MHz), if the SSB is located at the center of the carrier as in the 4G communication system, a terminal device needs long time and has high power consumption to search for SSBs on all frequencies in the system bandwidth. Therefore, in the 5G communication system, the SSB is no longer located at the center of the carrier, but is located at some possible locations in each frequency band. Further, each frequency band may correspond to a plurality of pieces of frequency information, and each piece of frequency information may correspond to a plurality of possible locations (where a network device sends an SSB at one of the possible locations). For a piece of frequency information, the terminal device may blindly detect a plurality of possible locations based on a synchronization raster to receive the SSB.

As a network scale increases, power consumption of a device keeps increasing. High power consumption of a network device gradually becomes one of main causes for high operation costs of operators. A 3rd generation partnership project (3rd generation partnership project, 3GPP) currently has discussions on energy saving of the network device (for example, a base station). For example, the network device may determine, based on load information, whether to perform an energy saving operation, for example, shutting down a cell. The load information may include radio resource usage, a quantity of users, a quantity of RRC connections, and the like. For example, the network device may shut down, at night based on the load information, a cell covering an area in which an office building is located. However, shutting down the cell to reduce power consumption is an energy saving operation in a coarse granularity manner. Generally, a condition for shutting down the cell is strict. Consequently, it is difficult for the network device to reduce power consumption by shutting down the cell.

Based on this, embodiments of this application study related implementation of energy saving for the network device. For example, in embodiments of this application, introducing an energy saving operation in a fine granularity manner is considered. For example, for a cell, the network device may perform some energy saving operations on an SSB of the cell, to reduce power consumption of the network device.

### Embodiment 1

In Embodiment 1, a network device may perform an energy saving operation on an SSB of a first cell (for example, reducing a transmit power and/or an antenna gain of the SSB of the first cell), to reduce power consumption. However, when the network device performs the energy saving operation on the SSB of the first cell, a measurement result of the SSB by a terminal device is affected. As a result, quality of the first cell measured by the terminal device is inaccurate.

To be specific, the cell quality may be quality of communication between the terminal device and the network device in the cell. For example, the cell quality may be obtained by the terminal device by measuring a signal sent by the network device in the cell. The cell quality may include at least one of a reference signal received power (reference signal received power, RSRP), reference signal received quality (reference signal received quality, RSRQ), and a signal to interference plus noise ratio (signal to interference plus noise ratio, SINR). For example, for a terminal device in an RRC idle (RRC_IDLE) state or an RRC inactive (Inactive) state, quality of a cell may be obtained by measuring an SSB sent by a network device in the cell. For a terminal device in an RRC connected (RRC_CONNECTED) state, quality of a cell may be obtained by measuring an SSB or a channel state information-reference signal (channel state information-reference signal, CSI-RS) sent by a network device in the cell. In this embodiment of this application, an example in which the terminal device obtains the cell quality by measuring the SSB is used for description.

For example, the terminal device may obtain the cell quality based on an average value of RSRPs of SSBs obtained through measurement at one or more time points. For example, the terminal device may obtain the cell quality based on an average value of an RSRP (referred to as RSRP 1) of a first SSB measured at a first time point and an RSRP (referred to as RSRP 2) of a second SSB measured at a second time point, in other words, the cell quality is equal to (RSRP 1+RSRP 2)/2.

However, when the network device performs the energy saving operation on the SSB (for example, reducing the transmit power of the SSB of the cell), an RSRP of the SSB obtained by the terminal device through measurement is affected. As a result, the cell quality determined by the terminal device is inaccurate. For example, when the network device does not perform the energy saving operation on the first SSB, a transmit power at which the network device sends the first SSB is a transmit power 1, and in this case, a coverage area of the first SSB is shown in (a) in FIG. 3. After the network device performs the energy saving operation on the first SSB, a transmit power at which the network device sends the first SSB is a transmit power 2 (where the transmit power 2 is less than the transmit power 1), and in this case, the coverage area of the first SSB is shown in (b) in FIG. 3. Because the coverage area of the first SSB is reduced when the energy saving operation is performed, the RSRP of the SSB obtained by the terminal device through measurement after the energy saving operation is performed is reduced. To be specific, when the network device does not perform the energy saving operation on the first SSB, the RSRP of the first SSB obtained by the terminal device through measurement is the RSRP 1. When the network device performs the energy saving operation on the first SSB, the RSRP of the first SSB obtained by the terminal device through measurement is an RSRP 1', and the RSRP 1' is less than the RSRP 1. In this case, the cell quality determined by the terminal device is equal to (RSRP 1'+RSRP 2)/2. Therefore, when the terminal device determines the cell quality based on an average value of the RSRP 1' and the RSRP 2, the cell quality is inaccurate.

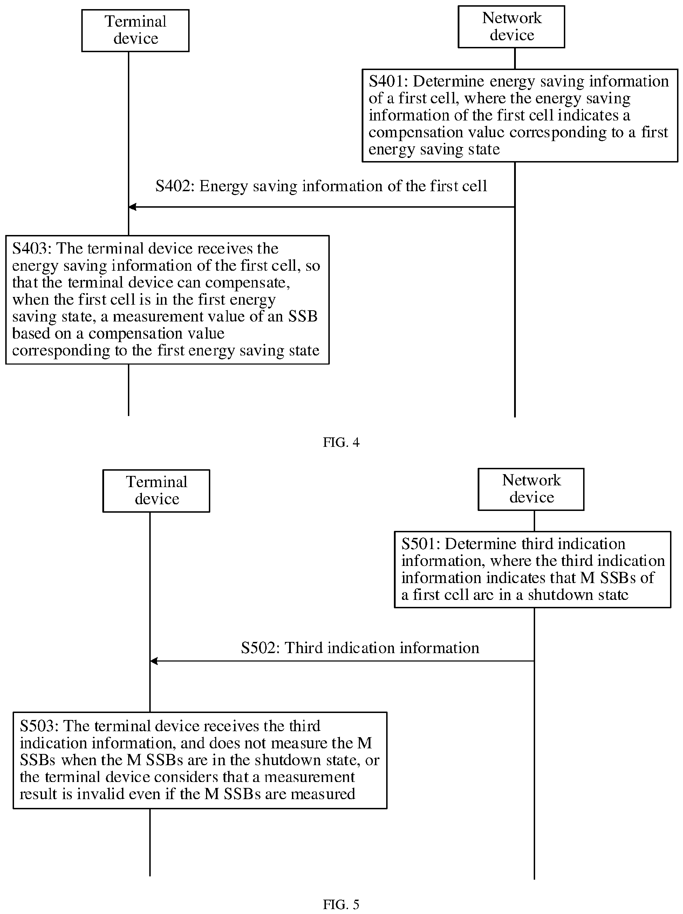

Based on this, an embodiment of this application provides a communication method. The following describes the method with reference to FIG. 4.

FIG. 4 is a schematic flowchart corresponding to a communication method according to Embodiment 1 of this application. As shown in FIG. 4, the method includes the following steps.

S401: The network device determines energy saving information of the first cell, where the energy saving information of the first cell indicates a compensation value corresponding to a first energy saving state.

The first cell may be any one of a plurality of cells managed by the network device.

The following describes the energy saving information of the first cell with reference to Implementation 1 and Implementation 2.

### (1) Implementation 1

An energy saving state may be configured for the first cell, and the energy saving state is the first energy saving state. The energy saving information of the first cell may indicate at least one compensation value corresponding to the first energy saving state, and each of the at least one compensation value may be associated with at least one SSB of the first cell. The compensation value is used to compensate a measurement value of an SSB associated with the compensation value, and a unit of the compensation value may be decibel (dB).

For example, in Case 1, all SSBs of the first cell may be associated with a same compensation value (referred to as a compensation value a). In this case, the first energy saving state may correspond to one compensation value (that is, the compensation value a). All the SSBs of the first cell may be all SSBs in a synchronization signal burst set of the first cell, or all SSBs actually transmitted by the network device in the first cell (where the actually transmitted SSBs may be a part or all of SSBs in a synchronization signal burst set). For another example, in Case 2, each SSB of the first cell may be associated with one compensation value. In this case, the first energy saving state may correspond to a plurality of compensation values.

Refer to Table 1. For example, the SSBs of the first cell include an SSB 0, an SSB 1, an SSB 2, and an SSB 3. In Case 1, the SSB 0, the SSB 1, the SSB 2, and the SSB 3 are all associated with the compensation value a. In Case 2, the SSB 0 is associated with a compensation value b0, the SSB 1 is associated with a compensation value b1, the SSB 2 is associated with a compensation value b2, and the SSB 3 is associated with a compensation value b3. Any two of the compensation value b0, the compensation value b1, the compensation value b2, and the compensation value b3 may be the same, or may be different.

**Table 1: Compensation value corresponding to an energy saving state**

| | SSB 0 | SSB 1 | SSB 2 | SSB 3 |
|---|---|---|---|---|
| Case 1 | Compensation value a | | | |
| Case 2 | Compensation value b0 | Compensation value b1 | Compensation value b2 | Compensation value b3 |

It may be understood that the foregoing Case 1 and Case 2 are merely examples for description, and there may be another possible case. For example, the SSB 0 and the SSB 1 are associated with a same compensation value, and the SSB 2 and the SSB 3 are associated with a same compensation value.

### (2) Implementation 2

A plurality of energy saving states may be configured for the first cell, and the plurality of energy saving states include the first energy saving state. The energy saving information of the first cell may indicate at least one compensation value corresponding to each of the plurality of energy saving states, and each of the at least one compensation value may be associated with at least one SSB of the first cell. For example, if the plurality of energy saving states include a deep energy saving state and a light energy saving state, the first energy saving state may be the deep energy saving state or the light energy saving state. For an SSB (for example, an SSB 0), a compensation value associated with the SSB 0 in the light energy saving state may be less than a compensation value associated with the SSB 0 in the deep energy saving state; or in other words, a transmit power of the SSB 0 in the light energy saving state is greater than a transmit power of the SSB 0 in the deep energy saving state.

Refer to Table 2. For example, SSBs of the first cell include an SSB 0, an SSB 1, an SSB 2, and an SSB 3. For the deep energy saving state, in Case 1, the SSB 0, the SSB 1, the SSB 2, and the SSB 3 are all associated with a compensation value a; and in Case 2, the SSB 0 is associated with a compensation value b0, the SSB 1 is associated with a compensation value b1, the SSB 2 is associated with a compensation value b2, and the SSB 3 is associated with a compensation value b3. For the light energy saving state, in Case 1, the SSB 0, the SSB 1, the SSB 2, and the SSB 3 are all associated with a compensation value c; and in Case 2, the SSB 0 is associated with a compensation value d0, the SSB 1 is associated with a compensation value d1, the SSB 2 is associated with a compensation value d2, and the SSB 3 is associated with a compensation value d3.

**Table 2: Compensation values corresponding to a plurality of energy saving states**

| | | SSB 0 | SSB 1 | SSB 2 | SSB 3 |
|---|---|---|---|---|---|
| Deep energy saving state | Case 1 | Compensation value a | | | |
| | Case 2 | Compensation value b0 | Compensation value b1 | Compensation value b2 | Compensation value b3 |
| Light energy saving state | Case 1 | Compensation value c | | | |
| | Case 2 | Compensation value d0 | Compensation value d1 | Compensation value d2 | Compensation value d3 |

S402: The network device sends the energy saving information of the first cell to the terminal device.

The network device may send the energy saving information of the first cell to the terminal device in a plurality of manners. For example, the network device may send a system message of the first cell to the terminal device, where the system message includes the energy saving information.

S403: The terminal device receives the energy saving information of the first cell, so that the terminal device can compensate, when the first cell is in the first energy saving state, the measurement value of the SSB based on the compensation value corresponding to the first energy saving state.

An example in which the compensation value associated with the SSB 0 is the compensation value a is used. That the terminal device compensates a measurement value of the SSB 0 based on the compensation value corresponding to the first energy saving state may mean that the terminal device adds the measurement value of the SSB 0 and the compensation value a. In other words, a compensated measurement value of the SSB 0 is equal to a sum of the measurement value of the SSB 0 and the compensation value a. For example, the terminal device may compensate measurement values of a plurality of SSBs, to obtain the quality of the first cell based on an average value of compensated measurement values of the plurality of SSBs. Further, the terminal device may send the quality of the first cell to the network device (where, if the terminal device is in a connected state, the network device may determine, based on the quality of the first cell reported by the terminal device, whether to hand over the terminal device to a cell other than the first cell).

The terminal device may determine that the first cell is in the first energy saving state in a plurality of manners. In a possible implementation, after S502, the network device may send first indication information to the terminal device, where the first indication information indicates that the first cell is in the first energy saving state, so that the terminal device can determine, based on the first indication information, that the first cell is in the first energy saving state. For example, after determining that load of the first cell satisfies a preset condition, the network device may send the first indication information to the terminal device. That load of the first cell satisfies a preset condition may mean that radio resource usage of the first cell is less than or equal to a first threshold, or may mean that a quantity of RRC connections of the first cell is less than or equal to a second threshold. The first threshold and the second threshold may be predefined in a protocol, and are not specifically limited.

For example, the first indication information may include at least one of the following: an identifier of the first energy saving state; start time information of the first energy saving state of the first cell; duration of the first energy saving state of the first cell; end time information of the first energy saving state of the first cell; and frequency range information of the first cell in the first energy saving state. The following describes the information in detail.

### (1) Identifier of the first energy saving state

When the plurality of energy saving states are configured for the first cell, the first indication information may include the identifier of the first energy saving state. When only one energy saving state (that is, the first energy saving state) is configured for the first cell, the first indication information may not include the identifier of the first energy saving state.

### (2) Start time information of the first energy saving state of the first cell

The first indication information may include the start time information of the first energy saving state of the first cell, so that the terminal device can determine, based on the start time information, when the first cell enters the first energy saving state. Alternatively, the first indication information may not include the start time information of the first energy saving state of the first cell. In this case, the terminal device may determine, based on receiving time of the first indication information, when the first cell enters the first energy saving state. For example, the receiving time of the first indication information is the start time of the first energy saving state of the first cell.

For example, the start time information of the first energy saving state of the first cell indicates a start slot and/or a start symbol of the first energy saving state of the first cell. For example, the start time information includes a number of the start slot and/or a number of the start symbol.

### (3) Duration of the first energy saving state of the first cell, and end time information of the first energy saving state of the first cell

The first indication information may include the duration of the first energy saving state of the first cell and/or the end time information of the first energy saving state of the first cell, so that the terminal device determines when the first cell ends the first energy saving state. Alternatively, the first indication information may not include the duration of the first energy saving state of the first cell and the end time information of the first energy saving state of the first cell. In this case, the network device may send second indication information to the terminal device, and the terminal device may determine, based on receiving time of the second indication information, when the first cell ends the first energy saving state. For example, the receiving time of the second indication information is the end time of the first energy saving state of the first cell.

For example, a unit of the duration of the first energy saving state of the first cell may be a slot, a symbol, or another possible time unit. This is not specifically limited. The end time information of the first energy saving state of the first cell indicates an end slot and/or an end symbol of the first energy saving state of the first cell. For example, the end time information includes a number of the end slot and/or a number of the end symbol.

### (4) Frequency range information of the first cell in the first energy saving state

The frequency range information of the first cell in the first energy saving state indicates a frequency range of the first cell in the first energy saving state. For example, the frequency range information may include a number of a start physical resource block (physical resource block, PRB) and a number of an end PRB that correspond to the frequency domain range.

The first indication information may include the frequency range information of the first cell in the first energy saving state. In this case, if the terminal device receives the SSB of the first cell within the frequency range, the terminal device may compensate the measurement value of the SSB based on the compensation value associated with the SSB. If the terminal device receives the SSB of the first cell outside the frequency domain range, the terminal device may not need to compensate the measurement value of the SSB. Alternatively, the first indication information may not include the frequency range information of the first cell in the first energy saving state. In this case, if the terminal device receives the SSB of the first cell, the terminal device may compensate the measurement value of the SSB based on the compensation value associated with the SSB.

It may be understood that the network device may send the first indication information to the terminal device in a plurality of manners. For example, the network device may send DCI to the terminal device, where the DCI may include all information of the first indication information, or the DCI may include some information of the first indication information. In this case, the network device may send the other information of the first indication information to the terminal device by using the system message. In an example, some information of the first indication information may include at least one of the following: the identifier of the first energy saving state, and the start time information of the first energy saving state of the first cell; and the other information of the first indication information may include at least one of the following: the duration of the first energy saving state of the first cell, the end time information of the first energy saving state of the first cell, and the frequency range information of the first cell in the first energy saving state. In addition, if the terminal device is in an idle state or an inactive state, the DCI may be DCI used to page the terminal device. In other words, the network device may page the terminal device, to notify the terminal device that the first cell is in the first energy saving state.

According to the method in the foregoing Embodiment 1, the network device may send the energy saving information of the first cell to the terminal device, where the energy saving information of the first cell indicates the compensation value corresponding to the first energy saving state. Therefore, when the first cell is in the first energy saving state, the terminal device may compensate, based on the compensation value, the measurement value of the SSB associated with the compensation value, and the compensated measurement value of the SSB may be used to determine the cell quality. In this way, accuracy of the cell quality determined by the terminal device can be improved while power consumption of the network device is reduced.

### Embodiment 2

In Embodiment 2, a network device may shut down a part of SSBs of a first cell, to reduce power consumption. However, after the network device shuts down the part of SSBs of the first cell, if a terminal device still measures the part of SSBs, the terminal device performs redundant measurement. In addition, if the terminal device determines quality of the first cell based on a measurement result of the part of SSBs, the quality of the first cell is inaccurate.

Based on this, an embodiment of this application provides a communication method. The following describes the method with reference to FIG. 5.

FIG. 5 is a schematic flowchart corresponding to a communication method according to Embodiment 2 of this application. As shown in FIG. 5, the method includes the following steps.

S501: The network device determines third indication information, where the third indication information indicates that M SSBs of the first cell are in a shutdown state, and M is a positive integer.

The M SSBs may be a part or all of SSBs of the first cell. For example, the third indication information may include indexes of the M SSBs. In this case, the indexes of the M SSBs may be consecutive or may be inconsecutive. Alternatively, the third indication information includes at least one of the following: an index of a 1^{st} SSB in the M SSBs, a value of M, and an index of a last SSB in the M SSBs. In this case, the indexes of the M SSBs are consecutive. The 1^{st} SSB in the M SSBs is an SSB with a smallest index value in the M SSBs, and the last SSB in the M SSBs is an SSB with a largest index value in the M SSBs.

For example, the third indication information may further indicate a first time period, and the M SSBs are in the shutdown state in the first time period. For example, the first time period includes at least one of the following: a first synchronization burst set periodicity, where the first synchronization burst set periodicity is a synchronization burst set periodicity in which receiving time of the third indication information falls; and K consecutive synchronization burst set periodicities, where a 1^{st} synchronization burst set periodicity in the K synchronization burst set periodicities is a next synchronization burst set periodicity of the first synchronization burst set periodicity, and K is a positive integer. The third indication information may indicate the first time period in a plurality of manners. This is not specifically limited.

S502: The network device sends the third indication information to the terminal device.

For example, after determining that load of the first cell satisfies a preset condition, the network device may determine the M SSBs that need to be shut down (in other words, determine the third indication information), and send the third indication information to the terminal device. For descriptions that the load of the first cell satisfies the preset condition, refer to Embodiment 1.

The network device may send the third indication information to the terminal device in a plurality of manners. In a possible implementation, the network device may send DCI to the terminal device, in other words, the third indication information may be carried in the DCI. In addition, if the terminal device is in an idle state or an inactive state, the DCI may be DCI used to page the terminal device. In other words, the network device may page the terminal device, to notify the terminal device that the M SSBs are in the shutdown state.

In a possible implementation, the SSBs of the first cell may be classified into two types of SSBs. First-type SSBs are SSBs that are not allowed to be dynamically shut down, and second-type SSBs are SSBs that are allowed to be dynamically shut down. In this case, the M SSBs may be a part or all of the second-type SSBs. There may be a plurality of bases for classifying the first-type SSBs and the second-type SSBs. This is not limited in this embodiment of this application.

Further, optionally, before S501, the network device may send fourth indication information to the terminal device, where the fourth indication information indicates N SSBs of the first cell that are allowed to be dynamically shut down, the M SSBs belong to the N SSBs, and N is a positive integer. In other words, the network device may first indicate, to the terminal device by using the fourth indication information, that the N SSBs are allowed to be dynamically shut down, and then dynamically indicate, to the terminal device by using the third indication information, the M SSBs that are actually shut down. The network device may send the fourth indication information to the terminal device in a plurality of manners. For example, the network device may send a system message of the first cell to the terminal device, and the system message includes the fourth indication information. In other words, the fourth indication information may be carried in the system message of the first cell.

S503: The terminal device receives the third indication information, and does not measure the M SSBs when the M SSBs are in the shutdown state, or the terminal device considers that a measurement result is invalid even if the M SSBs are measured.

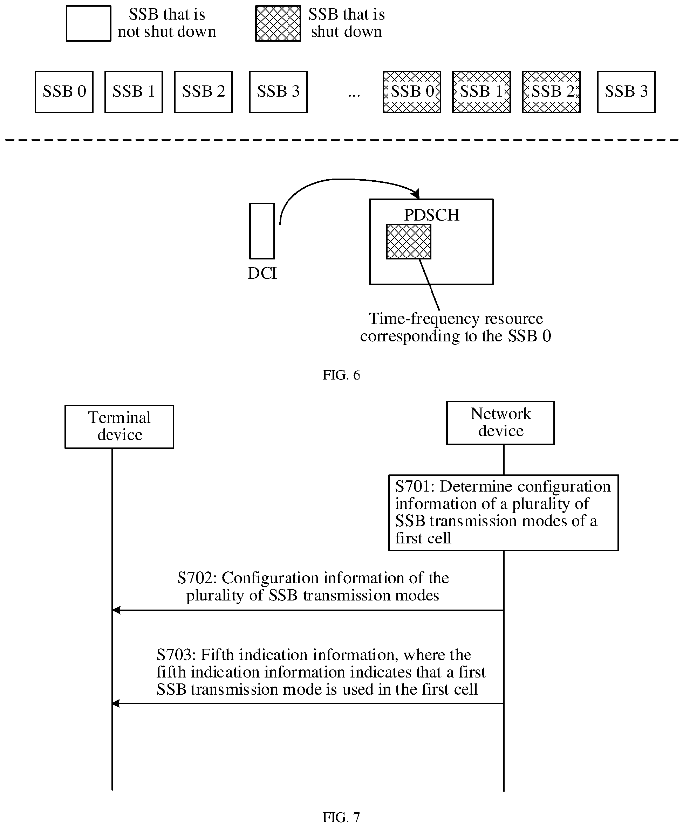

For example, the network device may send a PDSCH to the terminal device on a first time-frequency resource, where the first time-frequency resource includes a time-frequency resource corresponding to at least one of the M SSBs that are shut down. In other words, the network device may send the PDSCH to the terminal device by using the time-frequency resource corresponding to the SSB that is shut down, to improve resource utilization. Further, before sending the PDSCH to the terminal device on the first time-frequency resource, the network device may first send the DCI to the terminal device, where the DCI indicates the first time-frequency resource, so that the terminal device can receive the PDSCH on the first time-frequency resource based on the DCI, as shown in FIG. 6. It may be understood that, if the SSB is not shut down, the terminal device receives the SSB on an SSB resource, but does not receive the PDSCH.

According to the method in Embodiment 2, the network device may shut down the M SSBs of the first cell, to reduce power consumption of the network device. In addition, the network device may send the third indication information to the terminal device, where the third indication information indicates that the M SSBs of the first cell are in the shutdown state. Therefore, the terminal device may not measure the M SSBs based on the third indication information when the M SSBs are in the shutdown state, so that power consumption of the terminal device can be effectively reduced, or the measurement result is considered invalid even if the M SSBs are measured, to effectively avoid inaccurate cell quality determined by the terminal device.

### Embodiment 3

In Embodiment 3, a network device may configure a plurality of SSB transmission modes, and dynamically switch between the plurality of SSB transmission modes, to reduce power consumption. The following describes in detail with reference to FIG. 7.

FIG. 7 is a schematic flowchart corresponding to a communication method according to Embodiment 3 of this application. As shown in FIG. 7, the method includes the following steps.

S701: The network device determines configuration information of the plurality of SSB transmission modes of a first cell.

S702: The network device sends the configuration information of the plurality of SSB transmission modes to a terminal device; and correspondingly, the terminal device may receive the configuration information of the plurality of SSB transmission modes.

For example, the plurality of SSB transmission modes include a first SSB transmission mode, and configuration information of the first SSB transmission mode includes at least one of the following: an index of an SSB corresponding to the first SSB transmission mode; and a synchronization burst set periodicity corresponding to the first SSB transmission mode. It may be understood that the configuration information of the first SSB transmission mode may further include other possible information. This is not specifically limited.

For example, the plurality of SSB transmission modes include a first SSB transmission mode and a second SSB transmission mode. An index of an SSB corresponding to the first SSB transmission mode may include an SSB 0 and an SSB 1, and a synchronization burst set periodicity corresponding to the second SSB transmission mode is 20 ms. An index of an SSB corresponding to the second SSB transmission mode may include an SSB 0, an SSB 1, an SSB 2, and an SSB 3, and a synchronization burst set periodicity corresponding to the second SSB transmission mode is 10 ms.

S703: The network device sends fifth indication information to the terminal device, where the fifth indication information indicates that the first SSB transmission mode is used in the first cell, so that the network device can send an SSB in the first cell based on the first SSB transmission mode; and correspondingly, the terminal device may receive the fifth indication information, and receive the SSB in the first cell based on the first SSB transmission mode.

For example, the network device sends the fifth indication information to the terminal device in a plurality of manners. In a possible implementation, the network device may send DCI to the terminal device, in other words, the fifth indication information may be carried in the DCI. In addition, if the terminal device is in an idle state or an inactive state, the DCI may be DCI used to page the terminal device. In other words, the network device may page the terminal device, to notify the terminal device of the SSB transmission mode used in the first cell.

The fifth indication information indicates, in a plurality of manners, that the first SSB transmission mode is used in the first cell. For example, the fifth indication information includes an identifier of the first SSB transmission mode.

For example, when the network device sends the SSB to the terminal device in the second SSB transmission mode, if the network device determines that load of the first cell satisfies a preset condition, the network device may send the fifth indication information to the terminal device, where the fifth indication information indicates the network device to switch the SSB transmission mode used in the first cell to the first SSB transmission mode. Because the synchronization burst set periodicity corresponding to the first SSB transmission mode is greater than the synchronization burst set periodicity corresponding to the second SSB transmission mode, and a quantity of SSBs corresponding to the first SSB transmission mode is less than a quantity of SSBs corresponding to the second SSB transmission mode, the second SSB transmission mode is switched to the first SSB transmission mode, to effectively reduce power consumption of the network device.

For Embodiment 1 to Embodiment 3, it may be understood that:
(1) Step numbers of the flowcharts described in Embodiment 1 to Embodiment 3 are merely examples of performing the procedure, and do not constitute a limitation on a sequence of performing the steps. In embodiments of this application, there is no strict execution sequence between steps that do not have a time sequence dependency relationship with each other. In addition, not all steps shown in each flowchart are necessarily performed steps, and some steps may be added or deleted for each flowchart based on an actual requirement.
(2) The foregoing focuses on differences between different embodiments, that is, Embodiment 1 to Embodiment 3, and content other than the differences may be mutually referenced in Embodiment 1 to Embodiment 3. In addition, in a same embodiment, different implementations or different examples may also be mutually referenced.

The foregoing mainly describes the solutions provided in embodiments of this application from a perspective of interaction between communication apparatuses. It may be understood that, to implement the foregoing functions, the network device and the terminal device may include corresponding hardware structures and/or software modules for performing the functions. A person skilled in the art should be easily aware that, in combination with units and algorithm steps of the examples described in embodiments disclosed in this specification, embodiments of this application may be implemented by hardware or a combination of hardware and computer software. Whether a function is performed by hardware or hardware driven by computer software depends on particular applications and design constraint conditions of the technical solutions. A person skilled in the art may use different methods to implement the described functions for each particular application, but it should not be considered that the implementation goes beyond the scope of this application.

In embodiments of this application, division into functional units may be performed on the network device and the terminal device based on the foregoing method examples. For example, division into each functional unit may be based on each corresponding function, or two or more than two functions may be integrated into one unit. The integrated unit may be implemented in a form of hardware, or may be implemented in a form of a software functional unit.

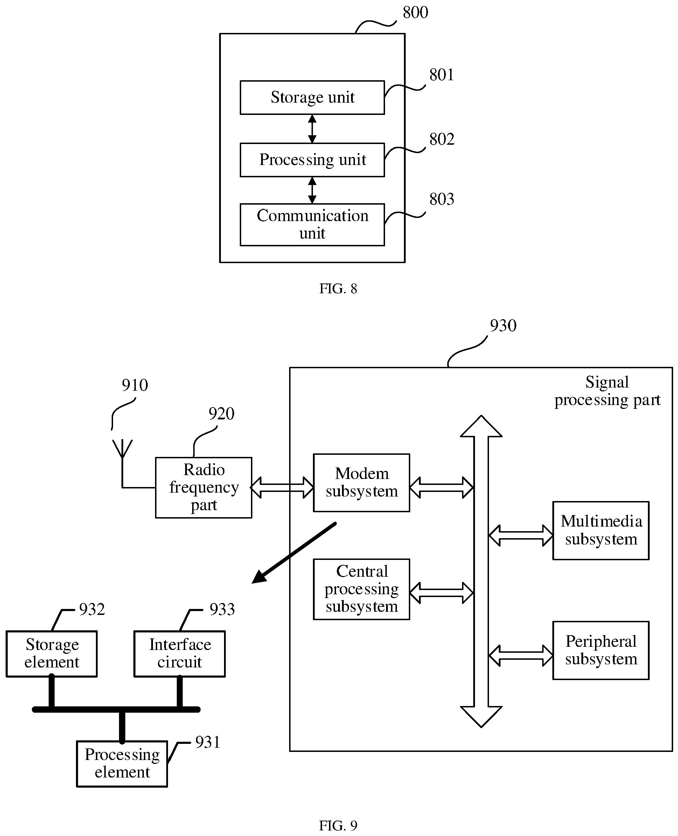

When an integrated unit is used, FIG. 8 is a block diagram of a possible example of an apparatus according to an embodiment of this application. As shown in FIG. 8, the apparatus 800 may include a processing unit 802 and a communication unit 803. The processing unit 802 is configured to control and manage an action of the apparatus 800. The communication unit 803 is configured to support communication between the apparatus 800 and another device. Optionally, the communication unit 803 is also referred to as a transceiver unit, and may include a receiving unit and/or a sending unit, respectively configured to perform a receiving operation and a sending operation. The apparatus 800 may further include a storage unit 801, configured to store program code and/or data of the apparatus 800.

The apparatus 800 may be the network device in the foregoing embodiment. The processing unit 802 may support the apparatus 800 in performing actions of the network device in the foregoing method examples. Alternatively, the processing unit 802 mainly performs internal actions of the network device in the method examples, and the communication unit 803 may support communication between the apparatus 800 and another device.

For example, in an embodiment, the processing unit 802 is configured to determine energy saving information of a first cell, where the energy saving information indicates a compensation value corresponding to a first energy saving state, and when the first cell is in the first energy saving state, the compensation value is used to compensate a measurement value of a synchronization signal and physical broadcast channel block SSB associated with the compensation value. The communication unit 803 is configured to send the energy saving information to a terminal device.

The apparatus 800 may be the terminal device in the foregoing embodiment. The processing unit 802 may support the apparatus 800 in performing actions of the terminal device in the foregoing method examples. Alternatively, the processing unit 802 mainly performs internal actions of the terminal device in the method examples, and the communication unit 803 may support communication between the apparatus 800 and another device.

For example, in an embodiment, the communication unit 803 is configured to receive energy saving information of a first cell from a network device, where the energy saving information indicates a compensation value corresponding to a first energy saving state. The processing unit 802 is configured to: when the first cell is in the first energy saving state, compensate, based on the compensation value, a measurement value of an SSB associated with the compensation value.

It should be understood that division into the units in the foregoing apparatus is merely logical function division. During actual implementation, all or some of the units may be integrated into one physical entity, or may be physically separated. In addition, all the units in the apparatus may be implemented in a form of software invoked by a processing element, or may be implemented in a form of hardware; or some units may be implemented in a form of software invoked by a processing element, and some units may be implemented in a form of hardware. For example, each unit may be a separately disposed processing element, or may be integrated into a chip of the apparatus for implementation. In addition, each unit may alternatively be stored in a memory in a form of a program to be invoked by a processing element of the apparatus to perform a function of the unit. In addition, all or some of the units may be integrated, or may be implemented independently. The processing element herein may also be referred to as a processor, and may be an integrated circuit having a signal processing capability. In an implementation process, operations in the foregoing methods or the foregoing units may be implemented by using a hardware integrated logic circuit in a processor element or may be implemented in a form in which the processing element invokes software.

In an example, the unit in any one of the foregoing apparatuses may be one or more integrated circuits configured to implement the foregoing method, for example, one or more application-specific integrated circuits (application-specific integrated circuit, ASIC), or one or more microprocessors (digital signal processors, DSPs), or one or more field programmable gate arrays (field programmable gate arrays, FPGAs), or a combination of at least two of these integrated circuit forms. For another example, when the units in the apparatus may be implemented in a form in which a processing element schedules a program, the processing element may be a processor, for example, a general-purpose central processing unit (central processing unit, CPU) or another processor that can invoke the program. For still another example, the units may be integrated and implemented in a form of a system-on-a-chip (system-on-a-chip, SoC).

The foregoing unit configured for receiving is an interface circuit of the apparatus, and is configured to receive a signal from another apparatus. For example, when the apparatus is implemented in a manner of a chip, the receiving unit is an interface circuit that is of the chip and that is configured to receive a signal from another chip or apparatus. The foregoing unit configured for sending is an interface circuit of the apparatus, and is configured to send a signal to another apparatus. For example, when the apparatus is implemented in a manner of a chip, the sending unit is an interface circuit that is of the chip and that is configured to send a signal to another chip or apparatus.

FIG. 9 is a diagram of a structure of a terminal device according to an embodiment of this application. The terminal device may be used in the communication system shown in FIG. 1, to implement operations of the terminal device in the foregoing embodiments. As shown in FIG. 9, the terminal device includes an antenna 910, a radio frequency part 920, and a signal processing part 930. The antenna 910 is connected to the radio frequency part 920. In a downlink direction, the radio frequency part 920 receives, via the antenna 910, information sent by a network device, and sends, to the signal processing part 930 for processing, the information sent by the network device. In an uplink direction, the signal processing part 930 processes information of the terminal device, and sends the information to the radio frequency part 920. The radio frequency part 920 processes the information of the terminal device, and then sends processed information to the network device via the antenna 910.

The signal processing part 930 may include a modem subsystem, configured to process data at each communication protocol layer. The signal processing part 930 may further include a central processing subsystem, configured to process an operating system and an application layer of the terminal device. In addition, the signal processing part 930 may further include another subsystem, for example, a multimedia subsystem or a peripheral subsystem. The multimedia subsystem is configured to control a camera, a screen display, and the like of the terminal device. The peripheral subsystem is configured to connect to another device. The modem subsystem may be a separately disposed chip.

The modem subsystem may include one or more processing elements 931, for example, include one main control CPU and another integrated circuit. In addition, the modem subsystem may further include a storage element 932 and an interface circuit 933. The storage element 932 is configured to store data and a program. However, a program used to perform the methods performed by the terminal device in the foregoing methods may not be stored in the storage element 932, but is stored in a memory outside the modem subsystem, and is loaded by the modem subsystem for use. The interface circuit 933 is configured to communicate with another subsystem.

The modem subsystem may be implemented by using a chip. The chip includes at least one processing element and an interface circuit. The processing element is configured to perform the steps of any method performed by the terminal device. The interface circuit is configured to communicate with another apparatus. In an implementation, units of the terminal device that implement the steps in the foregoing method may be implemented by a program scheduled by a processing element. For example, the apparatus used for the terminal device includes a processing element and a storage element. The processing element invokes a program stored in the storage element, to perform the method performed by the terminal device in the foregoing method embodiment. The storage element may be a storage element located on a same chip as the processing element, that is, an on-chip storage element.

In another implementation, the program used to perform the method performed by the terminal device in the foregoing method may be in a storage element located on a different chip from the processing element, that is, an off-chip storage element. In this case, the processing element invokes or loads the program from the off-chip storage element to an on-chip storage element, to invoke and perform the method performed by the terminal device in the foregoing method embodiment.

In still another implementation, units of the terminal device that implement the steps in the foregoing method may be configured as one or more processing elements. The processing elements are disposed in the modem subsystem. The processing element herein may be an integrated circuit, for example, one or more ASICs, one or more DSPs, one or more FPGAs, or a combination of the types of integrated circuits. These integrated circuits may be integrated together to form a chip.

Units of the terminal device that implement the steps in the foregoing method may be integrated together, and implemented in a form of SoC. The SoC chip is configured to implement the foregoing method. At least one processing element and a storage element may be integrated into the chip, and the processing element invokes a program stored in the storage element to implement the foregoing method performed by the terminal device. Alternatively, at least one integrated circuit may be integrated into the chip, to implement the foregoing method performed by the terminal device. Alternatively, with reference to the foregoing implementations, functions of some units may be implemented by a program invoked by the processing element, and functions of some units are implemented by the integrated circuit.

It can be learned that the foregoing apparatus used for the terminal device may include at least one processing element and an interface circuit. The at least one processing element is configured to perform any one of the methods that are performed by the terminal device and that are provided in the foregoing method embodiments. The processing element may perform some or all steps performed by the terminal device, in a first manner, to be specific, by invoking the program stored in the storage element; or may perform some or all steps performed by the terminal device, in a second manner, to be specific, by using a hardware integrated logical circuit in the processor element in combination with instructions; or may certainly perform, by combining the first manner and the second manner, some or all steps performed by the terminal device.

The processing element herein is the same as that described above, and may be implemented by using a processor. A function of the processing element may be the same as a function of the processing unit described in FIG. 8. For example, the processing element may be a general-purpose processor, for example, a CPU, or may be one or more integrated circuits configured to implement the foregoing method, for example, one or more ASICs, one or more microprocessors DSPs, or one or more FPGAs, or a combination of at least two of the integrated circuit forms. The storage element may be implemented by using a memory. A function of the storage element may be the same as a function of the storage unit described in FIG. 8. The storage element may be a memory, or may be a general name of a plurality of memories.

The terminal device shown in FIG. 9 can implement all processes related to the terminal device in the foregoing method embodiment. Operations and/or functions of modules in the terminal device shown in FIG. 9 are respectively intended to implement the corresponding procedures in the foregoing method embodiment. For details, refer to the descriptions in the foregoing method embodiment. To avoid repetition, detailed descriptions are properly omitted herein.

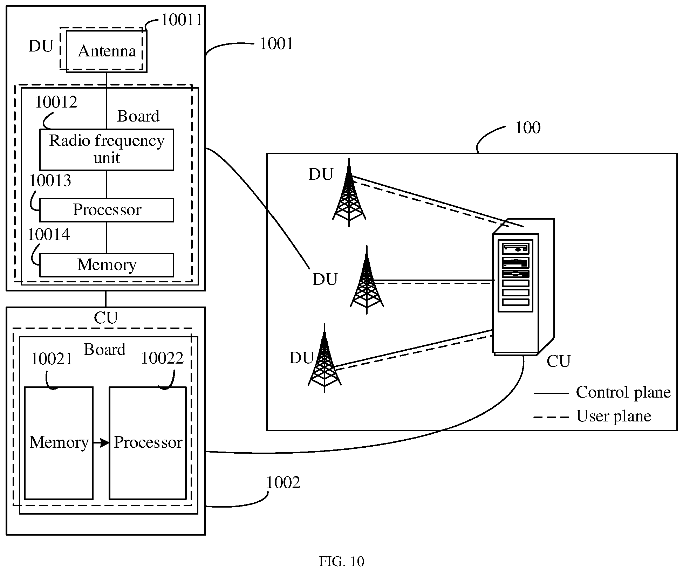

FIG. 10 is a diagram of a structure of a network device according to an embodiment of this application. The network device (or a base station) may be used in the communication system shown in FIG. 1, to perform functions of the network device in the foregoing method embodiment. As shown in FIG. 10, the network device 100 may include one or more DUs 1001 and one or more CUs 1002. The DU 1001 may include at least one antenna 10011, at least one radio frequency unit 10012, at least one processor 10013, and at least one memory 10014. The DU 1001 is mainly configured to: receive and send a radio frequency signal, perform conversion between the radio frequency signal and a baseband signal, and perform a part of baseband processing. The CU 1002 may include at least one processor 10022 and at least one memory 10021.

The CU 1002 is mainly configured to: perform baseband processing, control the network device, and the like. The DU 1001 and the CU 1002 may be physically disposed together, or may be physically disposed separately, in other words, in a distributed base station. The CU 1002 is a control center of the network device, may also be referred to as a processing unit, and is mainly configured to complete a baseband processing function. For example, the CU 1002 may be configured to control the network device to perform an operation procedure related to the network device in the foregoing method embodiment.

In addition, optionally, the network device 100 may include one or more radio frequency units, one or more DUs, and one or more CUs. The DU may include at least one processor 10013 and at least one memory 10014, the radio frequency unit may include at least one antenna 10011 and at least one radio frequency unit 10012, and the CU may include at least one processor 10022 and at least one memory 10021.

In an instance, the CU 1002 may include one or more boards. A plurality of boards may jointly support a radio access network (for example, a 5G network, a 6G network, or another network) with a single access indication, or may separately support radio access networks (for example, an LTE network, a 5G network, a 6G network, or another network) with different access standards. The memory 10021 and the processor 10022 may serve the one or more boards. In other words, a memory and a processor may be disposed on each board. Alternatively, the plurality of boards may share a same memory and a same processor. In addition, a necessary circuit may further be disposed on each board. The DU 1001 may include one or more boards. A plurality of boards may jointly support a radio access network (for example, a 5G network, a 6G network, or another network) with a single access indication, or may separately support radio access networks (for example, an LTE network, a 5G network, a 6G network, or another network) with different access standards. The memory 10014 and the processor 10013 may serve the one or more boards. In other words, a memory and a processor may be disposed on each board. Alternatively, the plurality of boards may share a same memory and a same processor. In addition, a necessary circuit may further be disposed on each board.

The network device shown in FIG. 10 can implement all processes related to the network device in the foregoing method embodiment. Operations and/or functions of modules in the network device shown in FIG. 10 are respectively intended to implement the corresponding procedures in the foregoing method embodiment. For details, refer to the descriptions in the foregoing method embodiment. To avoid repetition, detailed descriptions are properly omitted herein.

The terms "system" and "network" may be used interchangeably in embodiments of this application. "At least one" means one or more, and "a plurality of" means two or more. "And/or" describes an association relationship of associated objects, and indicates that three relationships may exist. For example, A and/or B may indicate the following three cases: Only A exists, both A and B exist, and only B exists, where A and B may be singular or plural. The character "/" generally indicates an "or" relationship between the associated objects. "At least one of the following items (pieces)" or a similar expression thereof indicates any combination of these items, including a single item (piece) or any combination of a plurality of items (pieces). For example, "at least one of A, B, and C" includes A, B, C, AB, AC, BC, or ABC. In addition, unless otherwise specified, ordinal numbers such as "first" and "second" in embodiments of this application are used to distinguish between a plurality of objects, and are not used to limit a sequence, a time sequence, a priority, or importance of the plurality of objects.

A person skilled in the art should understand that embodiments of this application may be provided as a method, a system, or a computer program product. Therefore, this application may use a form of hardware-only embodiments, software-only embodiments, or embodiments with a combination of software and hardware. In addition, this application may use a form of a computer program product that is implemented on one or more computer-usable storage media (including but not limited to a disk memory, an optical memory, and the like) that include computer-usable program code.

This application is described with reference to the flowcharts and/or block diagrams of the method, the device (system), and the computer program product according to this application. It should be understood that computer program instructions may be used to implement each procedure and/or each block in the flowcharts and/or the block diagrams and a combination of a procedure and/or a block in the flowcharts and/or the block diagrams. These computer program instructions may be provided for a general-purpose computer, a dedicated computer, an embedded processor, or a processor of another programmable data processing device to generate a machine, so that the instructions executed by a computer or a processor of another programmable data processing device generate an apparatus for implementing a specific function in one or more procedures in the flowcharts and/or in one or more blocks in the block diagrams.

These computer program instructions may alternatively be stored in a computer-readable memory that can indicate the computer or another programmable data processing device to work in a specific manner, so that the instructions stored in the computer-readable memory generate an artifact that includes an instruction apparatus. The instruction apparatus implements a specific function in one or more procedures in the flowcharts and/or in one or more blocks in the block diagrams.

The computer program instructions may alternatively be loaded onto a computer or another programmable data processing device, so that a series of operations and steps are performed on the computer or another programmable device, so that computer-implemented processing is generated. Therefore, the instructions executed on the computer or another programmable device provide steps for implementing a specific function in one or more procedures in the flowcharts and/or in one or more blocks in the block diagrams.

It is clearly that a person skilled in the art can make various modifications and variations to this application without departing from the spirit and scope of this application. This application is intended to cover these modifications and variations of this application provided that they fall within the scope of protection defined by the claims of this application and their equivalent technologies.

## Claims

1. A communication method, wherein the method comprises:
determining energy saving information of a first cell, wherein the energy saving information indicates a compensation value corresponding to a first energy saving state, and when the first cell is in the first energy saving state, the compensation value is used to compensate a measurement value of a synchronization signal and physical broadcast channel block SSB associated with the compensation value; and
sending the energy saving information to a terminal device.

2. The method according to claim 1, wherein the first energy saving state is a light energy saving state or a deep energy saving state.

3. The method according to claim 1 or 2, wherein the method further comprises:
sending first indication information to the terminal device, wherein the first indication information indicates that the first cell is in the first energy saving state.

4. The method according to claim 3, wherein the sending first indication information to the terminal device comprises:
sending the first indication information to the terminal device after determining that load of the first cell satisfies a preset condition.

5. The method according to claim 3 or 4, wherein the first indication information comprises at least one of the following:
an identifier of the first energy saving state;
start time information of the first energy saving state of the first cell;
duration of the first energy saving state of the first cell;
end time information of the first energy saving state of the first cell; or
frequency range information of the first cell in the first energy saving state.

6. The method according to any one of claims 3 to 5, wherein the first indication information is carried in downlink control information DCI.

7. The method according to claim 6, wherein the DCI is used to page the terminal device.

8. The method according to any one of claims 1 to 7, wherein the energy saving information is carried in a system message of the first cell.

9. A communication method, wherein the method comprises:
receiving energy saving information of a first cell from a network device, wherein the energy saving information indicates a compensation value corresponding to a first energy saving state; and
when the first cell is in the first energy saving state, compensating, based on the compensation value, a measurement value of an SSB associated with the compensation value.

10. The method according to claim 9, wherein the first energy saving state is a light energy saving state or a deep energy saving state.

11. The method according to claim 9 or 10, wherein the method further comprises:
receiving first indication information from the network device, wherein the first indication information indicates that the first cell is in the first energy saving state.

12. The method according to claim 11, wherein the first indication information comprises at least one of the following:
an identifier of the first energy saving state;
start time information of the first energy saving state of the first cell;
duration of the first energy saving state of the first cell;
end time information of the first energy saving state of the first cell; and
frequency range information of the first cell in the first energy saving state.

13. The method according to claim 11 or 12, wherein the first indication information is carried in DCI.

14. The method according to claim 13, wherein the DCI is used to page a terminal device.

15. The method according to any one of claims 9 to 14, wherein the energy saving information is carried in a system message of the first cell.

16. A communication apparatus, comprising a module configured to perform the method according to any one of claims 1 to 15.

17. A communication apparatus, comprising a processor, wherein the processor is coupled to a memory, and the memory stores a computer program; and the processor is configured to invoke the computer program in the memory, to enable the communication apparatus to perform the method according to any one of claims 1 to 15.

18. A communication apparatus, comprising a processor and an interface circuit, wherein the interface circuit is configured to receive a signal from a communication apparatus other than the communication apparatus and transmit the signal to the processor, or send a signal from the processor to a communication apparatus other than the communication apparatus, and the processor is configured to implement the method according to any one of claims 1 to 15 by using a logic circuit or executing code instructions.

19. A computer-readable storage medium, wherein the storage medium stores a computer program or instructions, and when the computer program or the instructions are executed by a computer, the method according to any one of claims 1 to 15 is implemented.

20. A computer program product, wherein when a computer reads and executes the computer program product, the computer is enabled to perform the method according to any one of claims 1 to 15.
